# EUROPÄISCHE PATENTSCHRIFT

(11) **EP 1 291 255 B1**
(45) Veröffentlichungstag und Bekanntmachung des Hinweises auf die Patenterteilung: **25.01.2006**
(21) Anmeldenummer: 02019656.4
(22) Anmeldetag: 03.09.2002
(51) Int. Cl.: B60S 9/02, B60S 11/00, B62D 25/20

(54) **Vorrichtung zur Aufnahme einer Fahrzeughubeinrichtung**
Device for receiving a vehicle supporting device
Dispositif destiné à recevoir un dispositif de support de véhicule

(30) Priorität: 05.09.2001 DE 10143374
(43) Veröffentlichungstag der Anmeldung: 12.03.2003
(73) Patentinhaber: Bayerische Motoren Werke Aktiengesellschaft, 80809 München (DE); VERITAS GUMMIWERKE AG, 63571 Gelnhausen (DE)
(72) Erfinder: Netzer, Herbert, 63457 Hanau (DE); Droessler, Christoph, 84085 Langquaid (DE); Rill, Roland, 80807 München (DE)
(74) Vertreter: Schernhammer, Herbert

(56) Entgegenhaltungen:
- DE-C- 19 831 548
- US-A- 4 494 671
- US-A- 4 588 105
- US-A- 4 965 915

## Beschreibung

### [Beschreibung]

Die Erfindung betrifft eine Vorrichtung zur Aufnahme einer Fahrzeughubeinrichtung nach dem Oberbegriff des Patentanspruches 1.

### [Stand der Technik]

Eine derartige aus der DE 198 31 548 C1 bekannte Vorrichtung besitzt einen Grundkörper aus einem schlagfesten, harten Kunststoff mit federnden, als Montagefinger ausgebildeten Rastelementen, welche an der dem Fahrzeug zugewandten Seite des Grundkörpers angeformt sind und an einem Fahrzeug-Karosserieteil eingerastet werden können. Die beiden Rastelemente sind im wesentlichen in einer Flucht mit zwei weiteren als Zentriereinrichtung wirkenden Montagefingern angeordnet. Ferner ist am Grundkörper eine umlaufende Dichtung an der dem Fahrzeug zugewandten Seite vorgesehen, welche mit einer Dichtungslippe aus nachgiebigem weichen Kunststoff bei eingerasteten Montagefingern am Fahrzeug-Karosserieteil anliegt. Im Grundkörper ist zwischen den Montagefingern ein zentrales Durchgangsloch vorgesehen, durch welches ein Spreizstift zum sicheren Festlegen der Montagefinger im auseinandergespreizten Zustand mit Presssitz hindurchgesteckt ist. Für den Spreizstift ist am fahrzeugabgewandten Umfangsrand des Durchgangsloches eine weitere Dichtung erforderlich. Des Weiteren offenbart das Dokument US-A-4494671 eine an einem Fahrzeug befestigbare Vorrichtung zum Schliessen einer fahrzeugseitigen Offnung, wobei die Vorrichtung eine Zeutriereinrichtung und die zu der Zeutriereinrichtung im seitlichen Abstand befestigte Rastelemente aufweist.

### [Aufgabe der Erfindung]

Aufgabe der Erfindung ist es, eine Vorrichtung der eingangs genannten Art zu schaffen, welche einen einfachen Aufbau aufweist.

Diese Aufgabe wird erfindungsgemäß durch das Kennzeichen des Patentanspruches 1 gelöst.

Bei der Erfindung sind die Rastelemente im seitlichen Abstand zur Zentriereinrichtung, welche als einzelner an den Grundkörper karosserieseitig angeformter Führungszapfen ausgebildet sein kann, am Grundkörper befestigt. Die umlaufende Dichtung weist erfindungsgemäß wenigstens eine Dichtlippe auf, die bezüglich der Zentriereinrichtung schräg nach außen gerichtet ist.

Die Dichtung kann zwei umlaufende Dichtlippen, nämlich eine innenliegende und eine außenliegende Dichtlippe aufweisen. Zumindest die außenliegende Dichtlippe ist vorzugsweise so ausgebildet, dass sie bezüglich der Zentriereinrichtung schräg nach außen geneigt ist und/oder beim Andrücken an das Karosserieteil seitlich nach außen verschwenken kann.

Durch die beiden Dichtlippen erreicht man eine doppelte umlaufende Dichtspur für die am Fahrzeug-Karosserieteil eingerastete Vorrichtung. Durch die beiden Dichtlippen erreicht man ferner einen verbesserten Toleranzausgleich und eine verbesserte Flexibilität für unterschiedliche Dicken des Karosserieteils bei unterschiedlichen Fahrzeugen. Aufgrund des relativ großen Abstandes der beiden Rastelemente voneinander, welcher etwa der Hälfte der Länge des im Grundriss rechteckigen Grundkörpers entsprechen kann, erreicht man einen prozesssicheren Verrastungsmechanismus. Ein zusätzliches Bauteil, wie beispielsweise ein Spreizstift ist nicht erforderlich. Der Abstand der beiden Rastelemente voneinander kann im Bereich von etwa 1/3 bis 2/3 der Länge des Grundkörpers gewählt werden.

Die Rastelemente sind vorzugsweise als federnd am Grundkörper befestige Rastleisten ausgebildet, die sich quer zur Längsausdehnung des Grundkörpers erstrecken. Eine Leistenlänge entspricht etwa 1/4 bis 1/2 der Breite des im Grundriss rechteckig ausgebildeten Grundkörpers. Vorzugsweise beträgt die Leistenlänge der jeweiligen Rastleiste etwa 1/3 der Breite des Grundkörpers.

Hierzu kann jede Rastleiste an zwei senkrechten starren Stützen, welche karosserieseitig fest mit dem Grundkörper verbunden sind, federnd schwenkbar befestigt sein. Eine an der Rastleiste vorgesehene Rastfläche, welche nach dem Durchstellen durch ein Langloch des Karosserieteils eine Hinterrastung bildet, ragt im entspannten Zustand, vorzugsweise nach außen über die Stützen hinaus.

In der Mitte zwischen den beiden Rastelementen kann ein karosserieseitig an den Grundkörper angeformter Führungszapfen, der etwa die gleiche Länge wie die Rastelemente aufweist und sich parallel zu den Rastelementen quer zur Längsausdehnung des Grundkörpers erstreckt, angeordnet sein.

Der Grundkörper kann im wesentlichen kastenförmig ausgebildet sein, wobei an den äußeren Seitenflächen Verstärkungsrippen eingeformt sind.

Als Werkstoffe für den Grundkörper eignen sich schlagfeste Werkstoffe, insbesondere aus Kunststoff, wie Polyamid (PA) vorzugsweise mit Glasfaser- oder Glaskugelverstärkung, Polybutylenterephtalat (PBT) mit Glasfaserverstärkung und andere geeignete Kunststoffe. Als Dichtungsmaterial eignen sich Ethylen-Propylen-Elastomere, wie Ethylen/Propylen-Dien-Terpolymere, thermoplastische Elastomere und Silikonkautschuke, insbesondere LSR (Liquid Silicone Rubber).

### [Beispiele]

Anhand der Figuren wird an Ausführungsbeispielen die Erfindung noch näher erläutert.

Es zeigt
- Fig. 1: in perspektivischer Darstellung ein erstes Ausführungsbeispiel;
- Fig. 2: eine Draufsicht auf das erste Ausführungsbeispiel;
- Fig. 3: eine Seitenansicht des Ausführungsbeispiels;
- Fig. 4: eine schnittbildliche Darstellung entlang der Schnittlinie C-C in Fig. 2;
- Fig. 5: eine schnittbildliche Darstellung entlang der Schnittlinie A-A in Fig. 3;
- Fig. 6: eine schnittbildliche Darstellung entlang der Schnittlinie B-B in Fig. 3; und
- Fig. 7: in perspektivischer auseinandergezogener Darstellung ein zweites Ausführungsbeispiel.

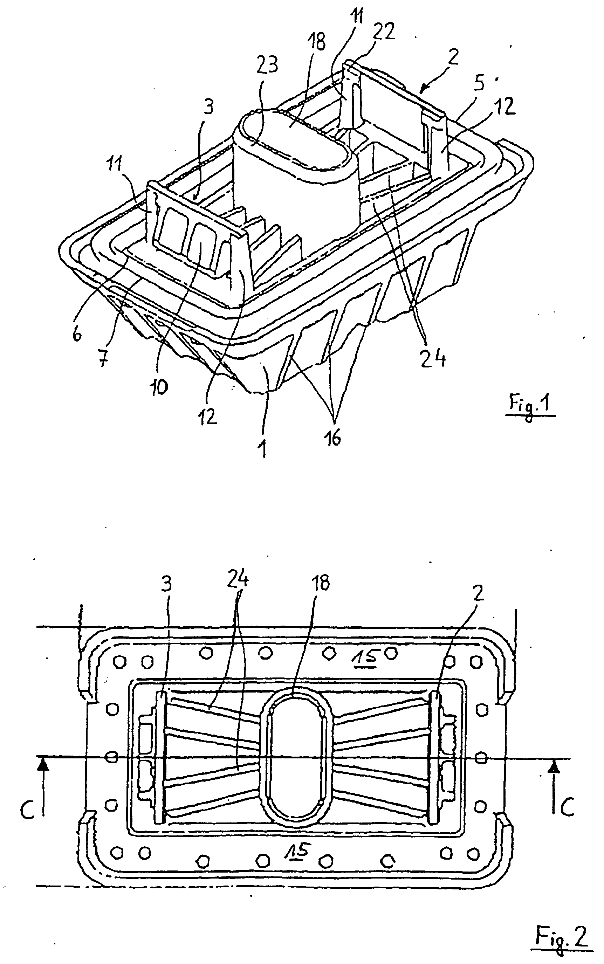

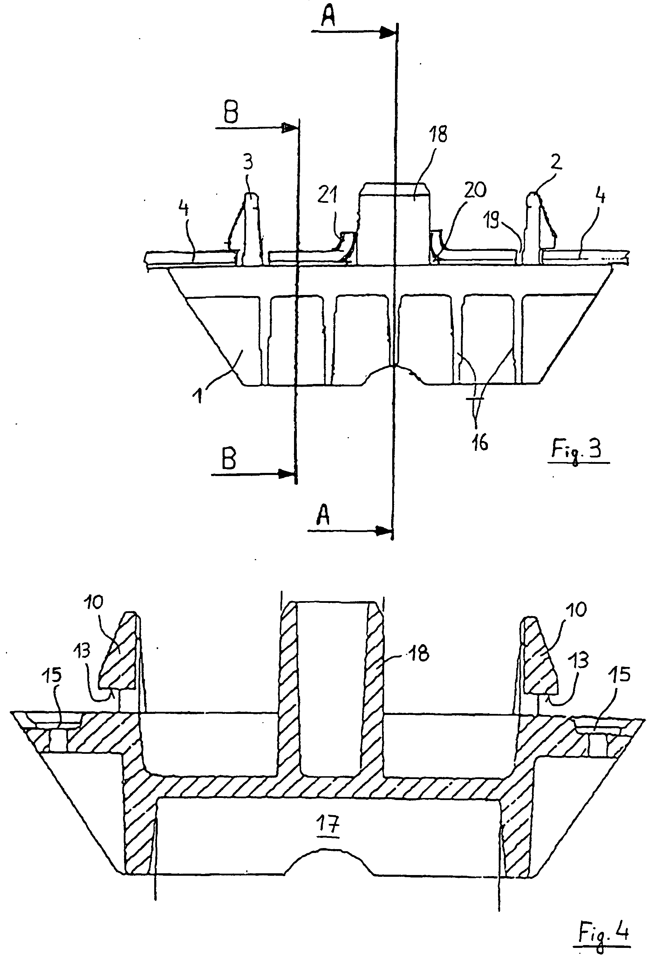

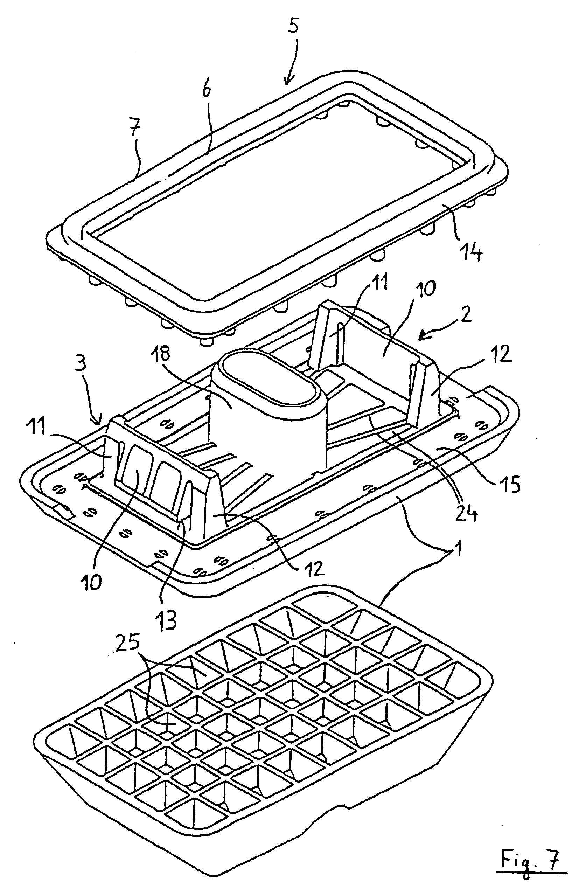

Die in den Figuren dargestellten Ausführungsbeispiele für eine Vorrichtung zur Aufnahme einer Fahrzeughubeinrichtung, beispielsweise eines Wagenhebers besitzen einen Grundkörper 1 aus hartem, schlagfesten Material, insbesondere Kunststoff. Beim Ausführungsbeispiel der Fig. 1 bis 6 ist der Grundkörper einteilig ausgebildet und beim Ausführungsbeispiel der Fig. 7 ist der Grundkörper 1 zweiteilig ausgebildet. Bei beiden Ausführungsbeispielen sind gleichwirkende Bauteile mit gleichen Bezugsziffern bezeichnet. Am Grundkörper 1 befinden sich an der Seite, welche dem Fahrzeug zugewandt ist, d.h. karosserieseitig, federnd ausgebildete Rastelemente 2, 3. Diese können an einem Fahrzeug-Karosserieteil 4, das beispielsweise im Bereich des Fahrzeugschwellers liegt, eingerastet werden. Ebenfalls karosserieseitig ist am Grundkörper 1 eine umlaufende Dichtung 5 vorgesehen, welche zwei umlaufende Dichtlippen, nämlich eine innenliegende Dichtlippe 6 und eine außenliegende Dichtlippe 7 aufweist. Die beiden umlaufenden Dichtlippen 6, 7 sind an einen Dichtungskörper 14 angeformt, welcher in einer entlang dem Rand des Grundkörpers 1 verlaufenden Nut 15 befestigt ist. Die beiden Dichtlippen 6, 7 ragen über die Ebene der karosserieseitigen Oberfläche des Grundkörpers 1 hinaus. Ihre Dichtkanten 8, 9, welche sich an den freien Enden der Dichtlippen 6, 7 befinden, liegen etwa in einer gleichen Ebene, die im wesentlichen parallel zu der karosserieseitigen Oberfläche des Grundkörpers 1 sich erstreckt. Die Dichtkanten 8, 9 kommen beim Zusammenbau in Anlage an das Karosserieteil 4 und bilden eine doppelte Dichtspur, mit welcher der Grundkörper 1 am Karosserieteil 4 (Fig. 3) abgedichtet ist.

Beide Dichtlippen 6 und 7 sind bezüglich der karosserieseitigen Oberfläche des Grundkörpers 1 im wesentlichen schräg nach außen geneigt angeordnet, wobei die außenliegende Dichtlippe 7 stärker geneigt sein kann als die innenliegende Dichtlippe 6. Beim Andrücken an die Fläche des Karosserieteils 4 werden die beiden Dichtlippen 6 und 7 schräg nach außen gekippt. Neben der schon erwähnten doppelten Dichtspur erreicht man damit einen verbesserten Toleranzausgleich bei unterschiedlichen Dicken des Karosserieteils 4, an welchem der Grundkörper 1 mit Hilfe der Rastelemente 2, 3 eingerastet wird.

Die Rastelemente 2, 3, welche vorzugsweise aus einem Stück mit dem Grundkörper 1 bestehend an diesem angeformt sind, besitzen einen Abstand voneinander, der etwa 1/3 bis 2/3 der Länge des im Grundriss rechteckigen Grundkörpers 1 entspricht. Der Abstand der Rastelemente 2, 3 voneinander kann vorzugsweise etwa der Hälfte der Länge des Grundkörpers 1 und insbesondere 5/9 der Länge des Grundkörpers 1 entsprechen. Hierdurch sind die Rastelemente 2, 3 in der Nähe der umlaufenden Dichtung 5 angeordnet.

Jedes der beiden Rastelemente 2, 3 besitzt eine Rastleiste 10, welche sich quer zur Längsausdehnung des Grundkörpers 1 erstreckt. Die Leistenlänge einer Rastleiste 10 beträgt etwa 1/4 bis 1/2 der Breite des im Grundriss rechteckig ausgebildeten Grundkörpers 1. Vorzugsweise beträgt die Leistenlänge etwa 1/3 der Breite des Grundkörpers 1. Die Rastleiste 10 ist an zwei senkrechten starren Stützen 11, 12, welche karosserieseitig fest mit dem Grundkörper 1 verbunden sind, federnd schwenkbar befestigt. Die beiden Stützen 11, 12 können aus dem gleichen Material, wie der Grundkörper 1 bestehen und aus einem Stück an diesen angeformt sein. Die Rastleiste 10 ist über eine sich zwischen den beiden oberen Enden der Stützen 11, 12 erstreckende Anlenkstelle an den Stützen 11, 12 rückfedernd schwenkbar befestigt. Die Anlenkstelle besteht aus dem gleichen Material wie die Stützen 11, 12 und die Rastleiste 10. An der Unterseite der Rastleiste 10, d.h. an der der karosserieseitigen Oberfläche des Grundkörpers 1 zugewandten Fläche besitzt die jeweilige Rastleiste 10 eine Rastfläche 13. Diese bildet nach dem Durchstellen des jeweiligen Rastelementes 2 bzw. 3 (Stützen 11, 12 und Rastleiste 10) durch ein Langloch 19 des Karosserieteiles 4 eine Hinterrastung (Fig. 3). Nach dem Durchstellen durch das Langloch 19 bewegt sich die Rastfläche 13 aufgrund der rückfedernden Befestigung der Rastleiste 10 an den Stützen 11, 12 in die in der Fig. 3 dargestellte Hinterrastungs-Stellung. Dabei befinden sich die Rastflächen 13 an der einen Oberfläche und die Dichtlippen 6, 7 an der anderen Oberfläche des Karosserieteils 4. Die Rastflächen 13 und die quer zur Längsausdehnung des Grundkörpers 1 verlaufenden Teile der Dichtlippen liegen nahe beieinander und sind im wesentlichen parallel zueinander angeordnet. Im entspannten Zustand ragen die Rastleisten, insbesondere die Rastflächen 13 nach außen über die Stützen 11, 12 hinaus, wie aus den Figuren zu ersehen ist. Die beiden Stützen 11, 12 besitzen gleiche Abstände zu den seitlichen Rändern des Grundkörpers 1. Sie sind zusammen mit der federnd daran gelagerten Rastleiste 10 symmetrisch zur Längsmittelebene des Grundkörpers angeordnet.

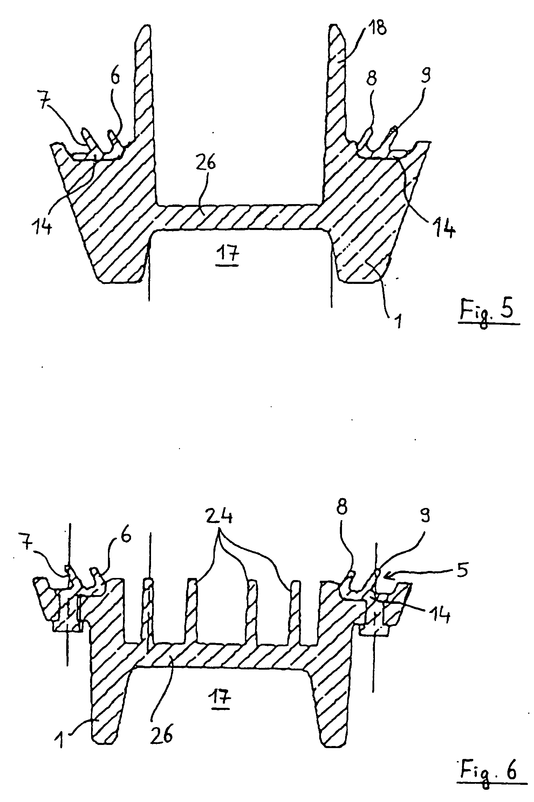

In der Mitte zwischen den Rastelementen 2, 3 befindet sich an der karosserieseitigen Oberfläche des Grundkörpers 1 ein Führungszapfen 18, welcher vorzugsweise aus dem gleichen Material wie der Grundkörper 1 besteht und einstückig an diesen angeformt sein kann. Der Führungszapfen 18 besitzt etwa die gleiche Länge wie die Rastelemente 2, 3 und erstreckt sich parallel zu den Rastelementen quer zur Längsausdehnung des Grundkörpers 1. Der Führungszapfen 18 ist vorzugsweise hohl ausgebildet, wobei jedoch sein von der Karosserie abgewandtes Ende geschlossen ist und das karosserieseitige Ende offen ist (Fig. 4 und 5). Gegenüber einem aus Vollmaterial bestehenden Führungszapfens erreicht man hierdurch eine Gewichtsersparnis ohne Beeinträchtigung der Führungseigenschaften des Führungszapfen 18 beim Zentrieren und Befestigen des Grundkörpers 1 am Karosserieteil 4.

An der Unterseite des Grundkörpers 1, d.h. an seiner vom Fahrzeug abgewandten Seite, besitzt der Grundkörper 1 eine Ausnehmung 17. Die Ausnehmung 17 besitzt einen durchgehenden Boden 26, welcher auch das untere Ende des Führungszapfens 18 verschließt. Zusätzliches Dichtungsmaterial im Bereich des Bodens der Ausnehmung 17 ist daher nicht erforderlich.

Beim Befestigen der Vorrichtung am Karosserieteil 4 wird der Führungszapfen 18 durch ein Langloch 20 im Karosserieteil 4 hindurchgeführt (Fig. 3). Das Langloch 20 kann einen Kragen 21 aufweisen. Das Langloch 20 und die beiden Langlöcher 19, durch welche die Rastelemente 2, 3 hindurchgeführt werden, erstrecken sich im Karosserieteil 4 im wesentlichen parallel zueinander. Dadurch dass der Führungszapfen 18 parallel zu den Rastelementen 2, 3 verlaufende seitliche Begrenzungsflächen aufweist, kann die Zentrierung des Grundkörpers 1 beim Zusammenbau unabhängig vom Rastsystem abgestimmt werden. Die Abstände der Rastelemente 2, 3 können an die jeweiligen Positionen der Langlöcher 19 im Karosserieteil 4 angepasst werden. Die Zentrierung beim Zusammenbau erfolgt mit Hilfe des Führungszapfens 18. An den freien Enden der Rastelemente 2, 3 sowie am Führungszapfen 18 können Führungsschrägen 22, 23 vorgesehen sein. Diese ermöglichen ein erleichtertes Einsetzen der Rastelemente und des Führungszapfens in den entsprechenden Langlöchern 19, 20.

Zur weiteren Gewichtersparnis ist der Grundkörper 1 wie ein Kasten mit im wesentlichen senkrechten oder leicht schrägen Wänden an den beiden Stirnseiten und den Seitenflächen ausgebildet. Der durchgehende Boden 26, welcher die Ausnehmung 17 zur Karosserieseite hin begrenzt, befindet sich etwa in halber Höhe des Grundkörpers (Fig. 4 bis 6). Zur Erhöhung der Festigkeit des Grundkörpers 1 sind an seiner Außenseite in den Seitenflächen und Stirnflächen Rippen, welche von oben nach unten konisch zulaufen, vorgesehen. Ferner sind in dem Raum zwischen dem durchgehenden Boden 26 und der Oberseite (karosserieseitige Oberfläche) des Grundkörpers 1 innenliegende Rippen 24 vorgesehen, welche sich etwa radial von den Seitenflächen des Führungszapfens 18 zu den stirnseitigen Wänden des kastenförmigen Grundkörpers 1 erstrecken.

Bei dem in der Fig. 7 dargestellten Ausführungsbeispiel ist der Grundkörper 1 zweiteilig ausgebildet, wobei im unteren Teil des Grundkörpers innenliegende Rippen 25 zur Gewichtsersparnis vorgesehen sind. Das untere Teil kann mit dem oberen Teil des Grundkörpers 1 beispielsweise durch Einrasten fest verbunden werden.

### [Bezugszeichenliste]

- 1: Grundkörper
- 2: Rastelement
- 3: Rastelement
- 4: Fahrzeug-Karosserieteil
- 5: umlaufende Dichtung
- 6: innenliegende Dichtlippe
- 7: außenliegende Dichtlippe
- 8: Dichtkante der innenliegenden Dichtlippe
- 9: Dichtkante der außenliegenden Dichtlippe
- 10: Rastleiste
- 11: Stütze für die Rastleiste
- 12: Stütze für die Rastleiste
- 13: Rastfläche
- 14: Dichtungskörper
- 15: umlaufende Nut
- 16: Rippen
- 17: Ausnehmung im Grundkörper
- 18: Führungszapfen
- 19: Langloch im Karosserieteil
- 20: Langloch im Karosserieteil
- 21: Kragen am Langloch 20
- 22: Schräge am Rastelement 2, 3
- 23: Schräge am Führungszapfen 18
- 24: Rippen
- 25: innenliegende Rippen
- 26: durchgehender Boden

## Patentansprüche

1. Vorrichtung zur Aufnahme einer Fahrzeughubeinrichtung mit einem Grundkörper (1) aus einem harten Material, einer am Grundkörper karosserieseitig vorgesehenen Zentriereinrichtung (18), federnden Rastelementen (2, 3), welche an einem Fahrzeugkarosserieteil (4) einrastbar sind, und einer umlaufenden Dichtung (S), welche karos-serieseitig am Grundkörper befestigt ist und wenigstens eine Dichtlippe (7) aufweist, **dadurch gekennzeichnet, dass** die Rastelemente (2, 3) im seitlichen Abstand zur Zentriereinrichtung (18) am Grundkörper befestigt sind und die Dichtlippe (7) bezüglich der Zentriereinrichtung (18) schräg nach außen gerichtet ist und beim Andrücken an das Fahrzeugkarosserieteil (4) seitlich nach außen verschwenken kann.

2. Vorrichtung nach Anspruch 1, **dadurch gekennzeichnet, dass** die Dichtung (5) zwei umlaufende Dichtlippen (6, 7) aufweist.

3. Vorrichtung nach Anspruch 2, **dadurch gekennzeichnet, dass** beide Dichtlippen (6, 7) oder zumindest die außenliegende Dichtlippe (7) schräg nach außen gerichtet und/oder verformbar ist.

4. Vorrichtung nach einem der Ansprüche 2 bis 3, **dadurch gekennzeichnet, dass** Dichtkanten (8, 9) an den freien Enden der beiden Dichtlippen (6, 7) in einer gemeinsamen zur karosserieseitigen Oberfläche des Grundkörpers (1) im wesentlichen parallelen Ebene liegen.

5. Vorrichtung nach einem der Ansprüche 2 bis 4, **dadurch gekennzeichnet, dass** die Dichtlippen (6, 7) an einem Dichtungskörper (14) angeformt sind, der in einer entlang dem Umfangsrand des Grundkörpers (1) verlaufenden Nut (15) an der karosserieseitigen Oberfläche des Grundkörpers (1) befestigt ist.

6. Vorrichtung nach einem der Ansprüche 1 bis 5, **dadurch gekennzeichnet, dass** der Grundkörper (1) als kastenförmiger Formkörper ausgebildet ist, an dessen Außenseiten Rippen (16) angeformt sind.

7. Vorrichtung nach einem der Ansprüche 1 bis 6, **dadurch gekennzeichnet, dass** die Rastelemente (2, 3) einen Abstand voneinander aufweisen, der etwa 1/3 bis 2/3 der Länge des im Grundriss rechteckigen Grundkörpers (1) entspricht.

8. Vorrichtung nach Anspruch 7, **dadurch gekennzeichnet, dass** der Abstand der Rastelemente (2, 3) voneinander etwa der Hälfte, insbesondere 5/9 der Länge des Grundkörpers (1) entspricht.

9. Vorrichtung nach einem der Ansprüche 1 bis 8, **dadurch gekennzeichnet, dass** die Rastelemente (2, 3) federnd am Grundkörper (1) befestigte Rastleisten (10) aufweisen, die sich quer zur Längsausdehnung des Grundkörpers (1) erstrecken und eine Leistenlänge besitzen, die etwa 1/4 bis 1/2 der Breite des im Grundriss rechteckig ausgebildeten Grundkörpers (1) entspricht.

10. Vorrichtung nach Anspruch 9, **dadurch gekennzeichnet, dass** die Leistenlänge etwa 1/3 der Breite des Grundkörpers (1) entspricht.

11. Vorrichtung nach Anspruch 9 oder 10, **dadurch gekennzeichnet, dass** jede Rastleiste (10) an zwei senkrechten starren Stützen (11, 12), welche karosserieseitig fest mit dem Grundkörper (1) verbunden sind, federnd schwenkbar befestigt ist.

12. Vorrichtung nach Anspruch 11, **dadurch gekennzeichnet, dass** eine an der Rastleiste (10) vorgesehene Rastfläche (13), welche in einem Langloch (19) des Karosserieteils (4) eine Hinterrastung bildet, im entspannten Zustand nach außen über die Stützen (11, 12) ragt.

13. Vorrichtung nach einem der Ansprüche 11 oder 12, **dadurch gekennzeichnet, dass** die beiden Stützen (11, 12) gleiche Abstände von den seitlichen Rändern des Grundkörpers (1) aufweisen.

14. Vorrichtung nach einem der Ansprüche 1 bis 13, **dadurch gekennzeichnet, dass** in der Mitte zwischen den Rastelementen (2, 3) ein karosserieseitig an den Grundkörper (1) angeformter Führungszapfen (18), der etwa die gleiche Länge wie die Rastelemente (2, 3) aufweist und sich parallel zu den Rastelementen (2, 3) quer zur Längsausdehnung des Grundkörpers (1) erstreckt, angeordnet ist.

15. Vorrichtung nach einem der Ansprüche 1 bis 14, **dadurch gekennzeichnet, dass** an den freien Enden der Rastelemente (2, 3) und/oder des Führungszapfens (18) Führungsschrägen (22, 23) vorgesehen sind.

16. Vorrichtung nach einem der Ansprüche 1 bis 15, **dadurch gekennzeichnet, dass** an der Karosserie abgewandten Seite des Grundkörpers (1) eine offene Ausnehmung (17) zur Aufnahme einer Fahrzeughubeinrichtung vorgesehen ist, wobei die Ausnehmung (17) an ihrem karosserieseitigen Ende von einem durchgehenden Boden (26) begrenzt ist.

## Claims

1. A device for holding a vehicle-lifting arrangement and comprising a base member (1) made of a hard material, a centring device (18) on the base member and facing the vehicle body, resilient locking elements (2. 3) for engaging a part (4) of the body, a peripheral seal (5) fastened to the base member on the side facing the body, and at least one sealing lip, **characterised in that** the locking elements (2, 3) are fastened to the base member at a lateral spacing from the centring arrangement (18) and the sealing lip (7) slopes outwards relative to the centring arrangement (18) and can pivot laterally outwards when pressed against the body part (4).

2. A device according to claim 1, **characterised in that** the seal (5) has two peripheral lips (6, 7).

3. A device according to claim 2, **characterised in that** both lips (6, 7) or at least the outer lip (7) slopes outwards and/or is deformable.

4. A device according to claim 2 or claim 3, **characterised in that** sealing edges (8, 9) on the free ends of the two lips (6, 7) lie in a common plane substantially parallel to the body-side surface of the base member (1).

5. A device according to any of claims 2 to 4, **characterised in that** the sealing lips (6, 7) are integrally moulded on a sealing member (14) fastened to the body-side surface of the base member (1) in a groove (15) along the peripheral edge of the base member (1).

6. A device according to any of claims 1 to 5, **characterised in that** the base member (1) is a box-shaped moulded member with ribs (16) integrally moulded on its outside.

7. A device according to any of claims 1 to 6, **characterised in that** the spacing between the locking elements (2, 3) is about ⅓ to 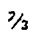 the length of the base member (1), which is rectangular in cross-section.

8. A device according to claim 7, **characterised in that** the spacing between the locking elements (2, 3) is preferably about half, especially 5/9, of the length of the base member (1).

9. A device according to any of claims 1 to 8, **characterised in that** the locking elements (2, 3) comprise locking ledges (10) resiliently fastened to the base member (1), extending transversely of the longitudinal extension of the base member (1) and having a length equal to approximately ¼ to ½ the width of the rectangular base member (1).

10. A device according to claim 9, **characterised in that** the length of the ledges is about ⅓ of the width of the base member (1).

11. A device according to claim 9 or claim 10, **characterised in that** each locking ledge (10) is resiliently and pivotably fastened to two rigid uprights (11, 12) which are firmly connected to the base member (1) on the body side.

12. A device according to claim 11, **characterised in that** a locking surface (13) on the ledge (10) forms an undercut in a slot (19) on the body part (4) and when free from tension projects outwards over the uprights (11, 12).

13. A device according to claim 11 or claim 12, **characterised in that** the two uprights (11, 12) are at equal distances from the side edges of the base member (1).

14. A device according to any of claims 1 to 13, **characterised in that** on the side facing the body, a guide journal (18) integrally moulded on the base member (1) is formed in the middle between the locking elements (2. 3) and has approximately the same length as the locking elements (2, 3) and extends parallel thereto, transversely of the longitudinal extension of the base member (1).

15. A device according to any of claims 1 to 14, **characterised in that** guide slopes (22, 23) are provided on the free ends of the locking elements (2. 3) and/or the guide journal (18).

16. A device according to any of claims 1 to 15, **characterised in that** an open recess (17) for holding a vehicle-lifting arrangement is provided on the side of the base member (1) remote from the body, wherein the end of the recess (17) facing the body is bounded by a continuous floor or bottom (26).

## Revendications

1. Dispositif destiné à recevoir un dispositif de levage de véhicule comportant un corps de base (1) en matériau dur, un dispositif de centrage (18) prévu côté carrosserie sur le corps de base, des éléments d'encliquetage élastiques (2, 3) qui s'encliquettent sur une partie de carrosserie du véhicule (4), une garniture d'étanchéité périphérique (5) qui est fixée côté carrosserie sur le corps de base et au moins une lèvre d'étanchéité,
**caractérisé en ce que**
les éléments d'encliquetage (2, 3) sont fixés sur le corps de base à distance latérale du dispositif de centrage (18), et la lèvre d'étanchéité (7) est dirigée de façon inclinée vers l'extérieur par rapport au dispositif de centrage (18) et peut pivoter latéralement vers l'extérieur en appuyant contre la partie de carrosserie (4).

2. Dispositif selon la revendication 1,
**caractérisé en ce que**
la garniture d'étanchéité (5) possède deux lèvres d'étanchéité périphériques (6, 7).

3. Dispositif selon la revendication 2,
**caractérisé en ce que**
les deux lèvres d'étanchéité (6, 7) ou au moins la lèvre d'étanchéité située à l'extérieur (7) sont dirigées et/ou déformables de façon inclinée vers l'extérieur.

4. Dispositif selon l'une des revendications 2 à 3,
**caractérisé en ce que**
les bords d'étanchéité (8, 9) sont situés sur les extrémités libres des deux lèvres d'étanchéité (6, 7) dans un plan commun pour l'essentiel parallèle à la surface côté carrosserie du corps de base (1).

5. Dispositif selon l'une des revendications 2 à 4,
**caractérisé en ce que**
les lèvres d'étanchéité (6, 7) sont formées sur un corps d'étanchéité (14) qui est fixé, dans une rainure (15) étendue le long du bord périphérique du corps de base (1), sur la surface côté carrosserie du corps de base (1).

6. Dispositif selon l'une des revendications 1 à 5,
**caractérisé en ce que**
le corps de base (1) est un corps moulé en forme de boîte sur les faces externes duquel des nervures (16) sont formées.

7. Dispositif selon l'une des revendications 1 à 6,
**caractérisé en ce que**
les éléments d'encliquetage (2, 3) présentent l'un par rapport à l'autre une distance qui est égale approximativement à 1/3 à 2/3 de la longueur du corps de base (1) rectangulaire en projection horizontale.

8. Dispositif selon la revendication 7,
**caractérisé en ce que**
la distance des éléments d'encliquetage (2, 3) l'un par rapport à l'autre est égale approximativement à la moitié, en particulier aux 5/9 de la longueur du corps de base (1).

9. Dispositif selon l'une des revendications 1 à 8,
**caractérisé en ce que**
les éléments d'encliquetage (2, 3) présentent des languettes d'encliquetage (10) fixées élastiquement sur le corps de base (1), qui s'étendent perpendiculairement à l'étendue longitudinale du corps de base (1) et possèdent une longueur égale approximativement à ¼ à ½ de la largeur du corps de base (1) de forme rectangulaire en projection horizontale.

10. Dispositif selon la revendication 9,
**caractérisé en ce que**
la longueur des languettes est égale approximativement à 1 /3 de la largeur du corps de base (1).

11. Dispositif selon la revendication 9 ou 10,
**caractérisé en ce que**
chaque languette d'encliquetage (10) est fixée de façon pivotante élastiquement sur deux montants rigides verticaux (11, 12) reliés côté carrosserie solidairement avec le corps de base (1).

12. Dispositif selon la revendication 11,
**caractérisé en ce qu'**
une face d'encliquetage (13) prévue sur la languette d'encliquetage (10), qui forme un encliquetage arrière dans un trou longitudinal (19) de la partie de carrosserie (4), dépasse des montants (11, 12) vers l'extérieur à l'état relâché.

13. Dispositif selon l'une des revendications 11 ou 12,
**caractérisé en ce que**
les deux montants (11, 12) présentent les mêmes distances par rapport aux bords latéraux du corps de base (1).

14. Dispositif selon l'une des revendications 1 à 13,
**caractérisé en ce qu'**
au centre entre les éléments d'encliquetage (2, 3), un axe de guidage (18) formé côté carrosserie sur le corps de base (1), présente approximativement la même longueur que les éléments d'encliquetage (2, 3) et s'étend parallèlement aux éléments d'encliquetage (2, 3) perpendiculairement à l'étendue longitudinale du corps de base (1).

15. Dispositif selon l'une des revendications 1 à 14,
**caractérisé par**
des biseaux de guidage (22, 23) sur les extrémités libres des éléments d'encliquetage (2, 3) et/ou de l'axe de guidage (18).

16. Dispositif selon l'une des revendications 1 à 15,
**caractérisé en ce que**
la face du corps de base (1) éloignée de la carrosserie comporte un évidement ouvert (17) destiné à recevoir un dispositif de levage de véhicule, et l'évidement (17) est délimité à son extrémité côté carrosserie par un fond de bout en bout (26).
